# EUROPEAN PATENT APPLICATION

(11) **EP 1 187 047 A1**
(43) Date of publication of application: **13.03.2002**
(21) Application number: 01118537.8
(22) Date of filing: 01.08.2001
(51) Int. Cl.: G06F 17/60

(54) **System of conducting procedure for service contract of service institution and consumer in place of both service institution and consumer and method using the system**

(30) Priority: 06.09.2000 JP 2000270320
(71) Applicant: NEC CORPORATION, Tokyo (JP)
(72) Inventor: Shimura, Satoshi, Minato-ku, Tokyo (JP)
(74) Representative: Betten & Resch

(57) **Abstract**

A system of the present invention comprises a service provider for making a predetermined contract with a service institution and a predetermined contract with a consumer to conduct, in place of the service institution and the consumer, a procedure associated with a service contract of the service institution and the consumer. Specifically, the service provider makes registration, changes, or deletion of personal information of the consumer in the service institution, registration, changes, or deletion of a service offered by the service institution to which the consumer subscribes, and sorts or lists service information provided by the service institution.

## Description

### BACKGROUND OF THE INVENTION

### 1. Field of the Invention:

The present invention relates to a service contract procedure conducting system for conducting a procedure of a service contract of a service institution and a consumer in place of the service institution and the consumer, and a method using the system.

### 2. Description of the Related Art:

In recent years, with the prevalence and sophistication of communication means such as the Internet and cellular phones, a consumer can obtain a variety of services through the communication means. In addition, a new service of consultation or mediation emerges for these services. Various studies are conducted from a practical standpoint including security measures, and it is expected that the services offered through the communication means such as the Internet will more safely and conveniently pervade people's lives.

When a consumer wishes to obtain a service through the communication means such as the Internet, to stop a service, or to change personal information (for example, the consumer's name, address, telephone number and the like), it is necessary for the consumer to individually conduct an associated procedure by telephone or through the Internet in a section serving as a contact point with consumers in each service institution (for example, a credit card company, bank, provider or the like) which offers the service.

In addition, when a consumer attempts to know what kinds of services each service institution offers, the consumer must directly inquire of a section serving as a contact point with consumer in each service institution, for example, by telephone or by referring to a home page of the institution. It is thus conceivable that the consumer often overlooks services convenient to him.

Thus, there is a need for a method of readily and safely performing operations such as registration, changes, or deletion in each service institution, and a method of showing a variety of services offered by each service institution at a glance. Such methods enable a typical consumer to obtain a wider variety of services according to circumstances and to easily obtain only necessary services.

### SUMMARY OF THE INVENTION

It is an object of the present invention to provide a service contract procedure conducting system capable of readily and safely performing operations such as registration, changes, or deletion in each service institution and showing various services offered by each service institution at a glance, and a method using the system.

In the present invention, the system comprises a service provider for conducting a procedure associated with a service contract including registration, changes, and deletion of personal information, or registration, changes, and deletion of a service in a service institution and a consumer each having a predetermined contract with the service provider.

The consumer can easily and safely perform registration, changes, deletion and the like of the personal information or the service. Even when the consumer has contracts with a plurality of service institutions, the consumer has only to notify the service provider of the registration or the like of the personal information or service. It is thus unnecessary for the consumer to make a notification to each service institution individually, thereby eliminating the need for making the same entries and notification repeatedly.

The service institution may previously notify the service provider of details on essential personal information required at the registration of the consumer as a subscriber to a service offered by the service institution and the service provider may previously notify a consumer terminal of the consumer of the details of the essential personal information notified by the service institution such that the consumer is registered as a subscriber to the service only when the consumer registers the essential personal information. In this case, since the consumer is not registered as a subscriber to the service unless the consumer registers the essential personal information requested by the service institution in the service provider, the consumer may make a redetermination whether the consumer subscribes to the service offered by the service institution depending on the details on the essential personal information requested by the service institution.

The service provider may sort services offered by the service institution to present a list of the sorted services to the consumer terminal. In this case, the consumer can change and delete a service after he sees the list of the already registered services, and the consumer can sort the already registered services by himself. In addition, since the procedure on the consumer side is conducted more conveniently, it is expected that the consumer is encouraged to subscribe to a greater number of services or a greater number of consumers subscribe to services.

The service institution can reduce costs for advertising and publicity since it can let consumers know about a new service or a change in a service through the service provider if only it notifies the service provider of the new service or the change. In addition, for a venture capital organization which attempts to start a new business, the service provider serves well as a contact point with consumers in introducing the new business to them.

The above and other objects, features, and advantages of the present invention will become apparent from the following description with reference to the accompanying drawings which illustrate examples of the present invention.

### BRIEF DESCRIPTION OF THE DRAWINGS

Fig. 1 is a block diagram showing a service contract procedure conducting system of an embodiment of the present invention;
Fig. 2 illustrates an exemplary hierarchical configuration and a flow of processing in a contact point with users offered by an Internet service provider shown in Fig. 1;
Fig. 3 illustrates an example of a screen display by the Internet service provider shown in Fig. 1 to provide a user with the hierarchical configuration shown in Fig. 2;
Fig. 4 illustrates another example of a screen display by the Internet service provider shown in Fig. 1 to provide a user with the hierarchical configuration shown in Fig. 2;
Fig. 5 illustrates a further example of a screen display by the Internet service provider shown in Fig. 1 to provide a user with the hierarchical configuration shown in Fig. 2;
Fig. 6 illustrates a yet further example of a screen display by the Internet service provider shown in Fig. 1 to provide a user with the hierarchical configuration shown in Fig. 2;
Fig. 7 illustrates a still further example of a screen display by the Internet service provider shown in Fig. 1 to provide a user with the hierarchical configuration shown in Fig. 2;
Fig. 8 illustrates another example of a screen display by the Internet service provider shown in Fig. 1 to provide a user with the hierarchical configuration shown in Fig. 2;
Fig. 9 illustrates a further example of a screen display by the Internet service provider shown in Fig. 1 to provide a user with the hierarchical configuration shown in Fig. 2;
Fig. 10 illustrates a yet further example of a screen display by the Internet service provider shown in Fig. 1 to provide a user with the hierarchical configuration shown in Fig. 2;
Fig. 11 illustrates a still further example of a screen display by the Internet service provider shown in Fig. 1 to provide a user with the hierarchical configuration shown in Fig. 2; and
Fig. 12 illustrates another example of a screen display by the Internet service provider shown in Fig. 1 to provide a user with the hierarchical configuration shown in Fig. 2.

### DESCRIPTION OF THE PREFERRED EMBODIMENT

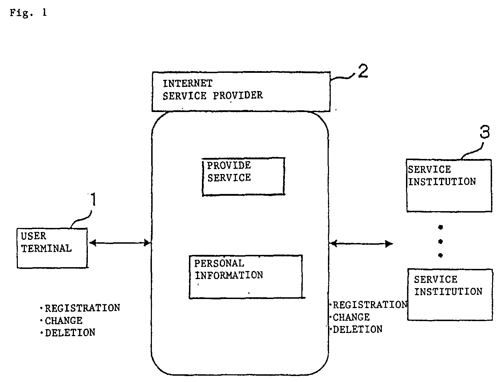

As shown in Fig. 1, a service contract procedure conducting system of an embodiment of the present invention comprises service institution 3 for offering services through a network such as the Internet, user terminal 1 serving as a consumer terminal for subscribing to services offered by service institution 3 to obtain the services, and Internet service provider 2 serving as a contact point with user terminal 1 and service institution 3 for conducting a procedure of a service contract or making an inquiry between user terminal 1 and service institution 3 in place of them.

Internet service provider 2 holds and manages two kinds of information including personal information of a user of user terminal 1, specifically, the user's name, address, telephone number, cellular phone number, E-mail address, office, address of the office or the like, and service information provided by service institution 3.

Internet service provider 2 makes a contract with the user of user terminal 1 to cause the user to enter personal information which is held and managed by Internet service provider 2.

Internet service provider 2 also makes a contract or an agreement with service institution 3 to cause service institution 3 to provide service information which is held and managed by Internet service provider 2.

When service institution 3 provides Internet service provider 2 with the service information, it makes a brief description and presentation of services which it can offer to the user of user terminal 1. The service information is preferably updated as appropriate to always provide the most up-to-date information.

Internet service provider 2 is assumed to receive a request from the user of user terminal 1 for a more detailed description of the services. Internet service provider 2 is thus configured such that it allows a link to a page containing as its contents details on the services or it allows an inquiry to service institution 3 by telephone or an E-mail.

Service institution 3 previously has notified Internet service provider 2 which information is essential personal information desired by service institution 3 of the personal information of the user of user terminal 1. Internet service provider 2 previously has notified user terminal 1 of the details on the essential personal information (for example, the name, address, and E-mail address of the user) requested by service institution 3. This enables Internet service provider 2 to transmit to service institution 3 only the minimum required personal information requested by service institution 3 rather than transmit to service institution 3 all the personal information entered by the user of user terminal 1. The user of user terminal 1 may make a redetermination whether the user subscribes to the services offered by service institution 3 depending on the essential personal information requested by service institution 3.

When user terminal 1, Internet service provider 2, and service institution 3 communicate the aforementioned personal information or service information through the network, a certain security technique is utilized to prevent leakage of the information during the communication. In addition, a certain authentication technique is utilized to prevent fraud such as someone behaving as the user.

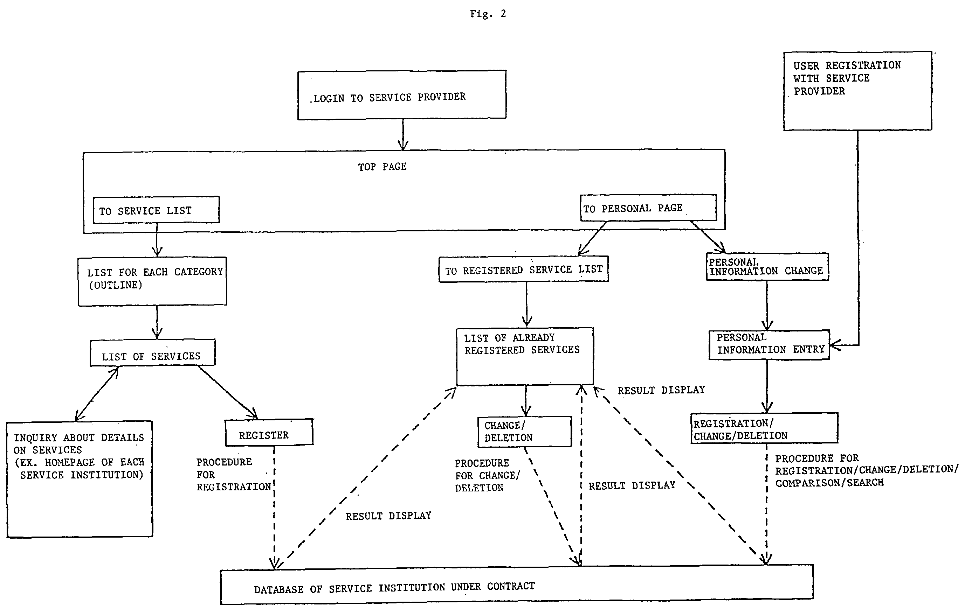

Description is hereinafter made for a method of conducting a service contact procedure using the service contract procedure conducting system configured as described above with reference to Figs. 2 to 12.

Internet service provider 2 provides a hierarchical configuration shown in Fig. 2 for the user of user terminal 1 such that the user can easily understand, for example, by displaying it on user terminal 1 through a CGI (Common Gateway Interface).

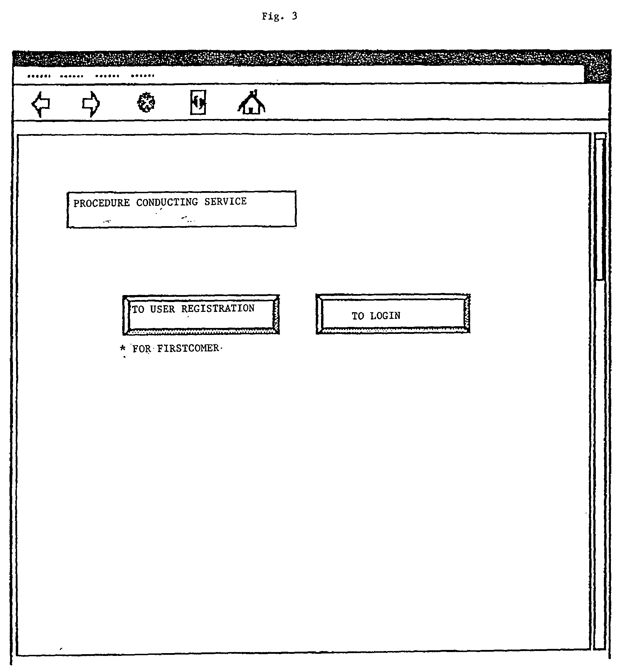

The user of user terminal 1 accesses a top page offered by Internet service provider 2 to obtain a service for conducting a service contract procedure. In response to the access, Internet service provider 2 first produces a screen display shown in Fig. 3 on user terminal 1.

When the user of user terminal 1 accesses the top page offered by Internet service provider 2 for the first time, he selects "to user registration" on the display screen shown in Fig. 3 and registers as a user with Internet service provider 2 in order to make a contract with Internet service provider 2. On the other hand, when the user has already registered with Internet service provider 2, he selects "to login" to subscribe to a service or the like.

Now, description is made for how the user of user terminal 1 registers as a user with Internet service provider 2.

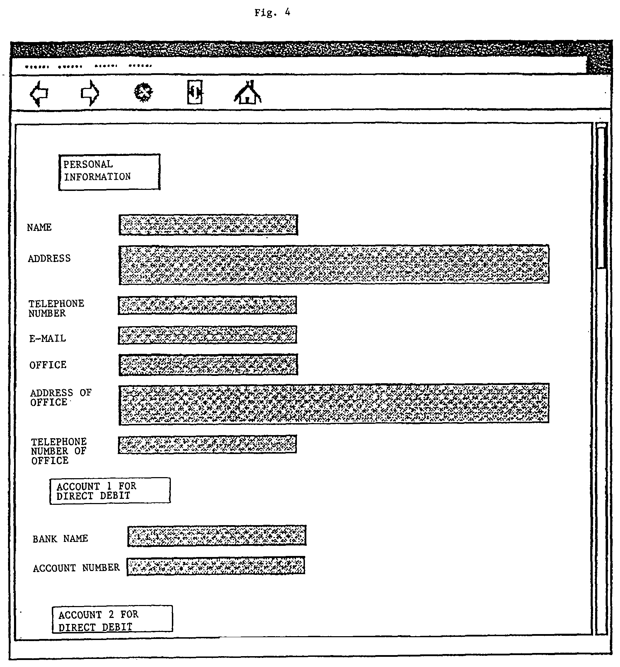

When the user of user terminal 1 selects "to user registration" on the display screen shown in Fig. 3, Internet service provider 2 produces a screen display shown in Fig. 4 on user terminal 1 for entering personal information.

Next, the user of user terminal 1 enters personal information on the display screen shown in Fig. 4 to register the personal information with Internet service provider 2.

The user of user terminal 1 desirably registers as detailed personal information as possible such as his office or account for direct debit in addition to the name, address, and telephone number as the personal information registered with Internet service provider 2. It should be noted that the user need not register all the items of personal information shown in Fig. 4 and the user may register personal information in an acceptable range. However, if essential personal information requested by service institution 3 is not registered, the user cannot be registered correctly as a subscriber to the services offered by service provider 3. It is thus necessary to register as detailed personal information as possible in a range acceptable to the user.

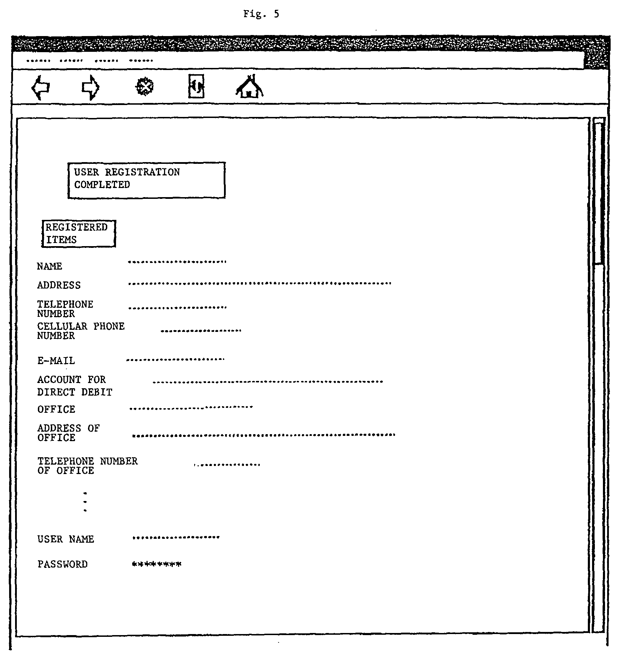

After the entry of the personal information of the user of user terminal 1 is completed, Internet service provider 2 accesses a database of each service institution 3 under contract with Internet service provider 2 through the Internet or by telephone or the like. Internet service provider 2 stores the personal information of the user in the database and produces a screen display shown in Fig. 5 on user terminal 1 for showing the completion of the user registration.

At this point, Internet service provider 2 causes the user to enter an arbitrary user name and password on the screen for showing the completion of the user registration shown in Fig. 5 and stores the entered user name and password in the database of each service institution 3. Thereafter, the user of user terminal 1 enters the aforementioned user name and password at the time of login when the user accesses a top page of Internet service provider 2. The aforementioned user name and password may be provided arbitrarily by Internet service provider 2.

Internet service provider 2 accesses the database of each service institution 3 to register the user, and at the same time, searches the database for services subscribed to by the user who has registered personal information with Internet service provider 2 to sort those services. Alternatively, for sorting services, Internet service provider 2 may cause the user to directly enter the services subscribed to under contract with service institution 3 and to sort the services based on the entered result.

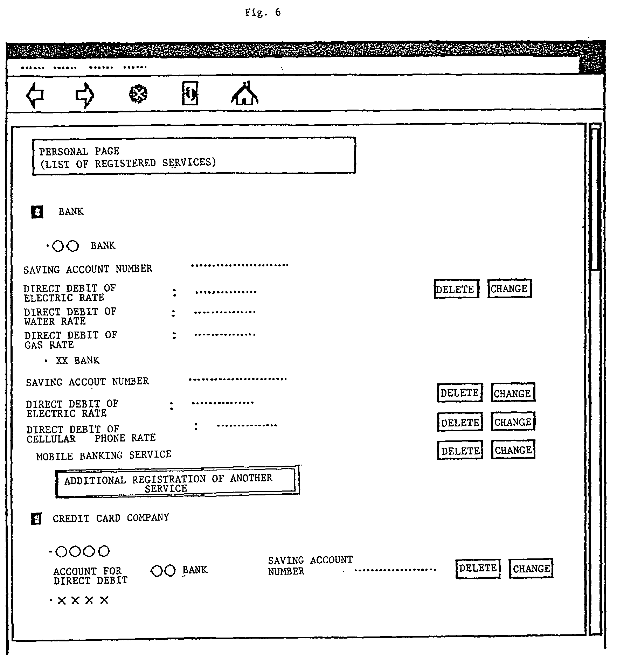

Next, Internet service provider 2 displays the resulting sorted services subscribed to by the user of user terminal 1 as a list on user terminal 1 as shown in Fig. 6. The display as a list allows the user of user terminal 1 to further arrange the services subscribed to by the user by himself.

Fig. 6 shows ○○ bank, × × bank, credit card company ○○○○, and credit card company ×××× as service institution 3 under contract with the user of user terminal 1. Fig. 6 also shows services offered by each service institution 3 under contract with the user. While the user of user terminal 1 can delete or change a service for which the user already has a contract with each service institution 3 on the display screen shown in Fig. 6, the deletion or change operation is later described.

Next, description is made for how the user of user terminal 1 registers a service provided by each service institution 3 and how the user makes an inquiry about details on a service offered by each service institution 3 after the registration of the user is completed with Internet service provider 2.

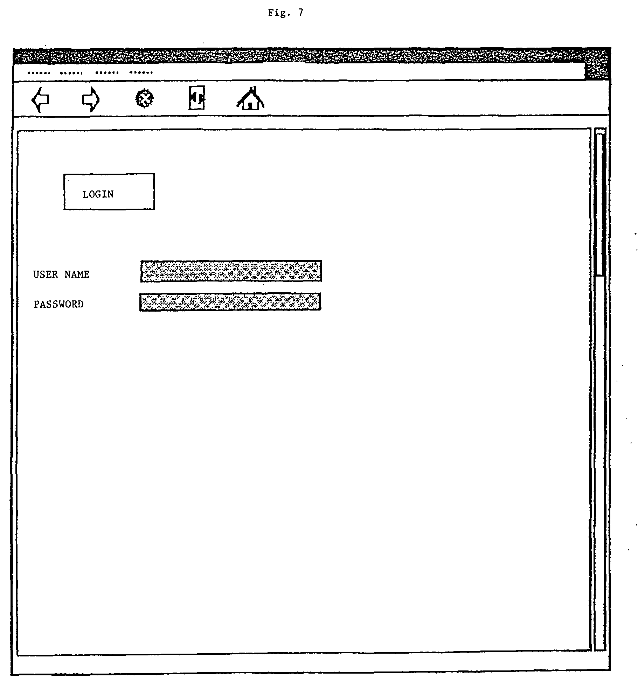

When the user of user terminal 1 selects "to login" on the display screen shown in Fig. 3, Internet service provider 2 produces a login screen display shown in Fig. 7 on user terminal 1.

Next, the user of user terminal 1 enters a user name and password on the display screen shown in Fig. 7.

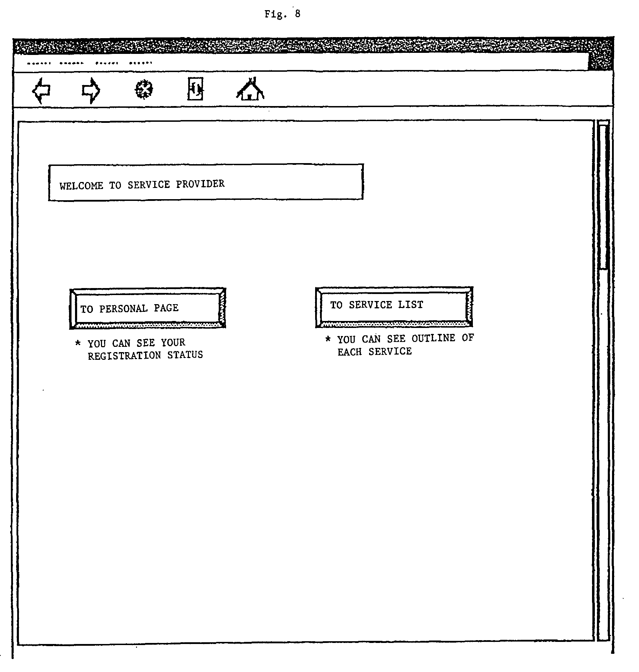

Then, Internet service provider 2 compares the user name and password entered by the user of user terminal 1 with the user name and password stored in the database of each service institution 3 for a match. If both match, Internet service provider 2 displays a top page of Internet service provider 2 on user terminal 1 in which the user can select "to personal page" or "to service list" as shown in Fig. 8.

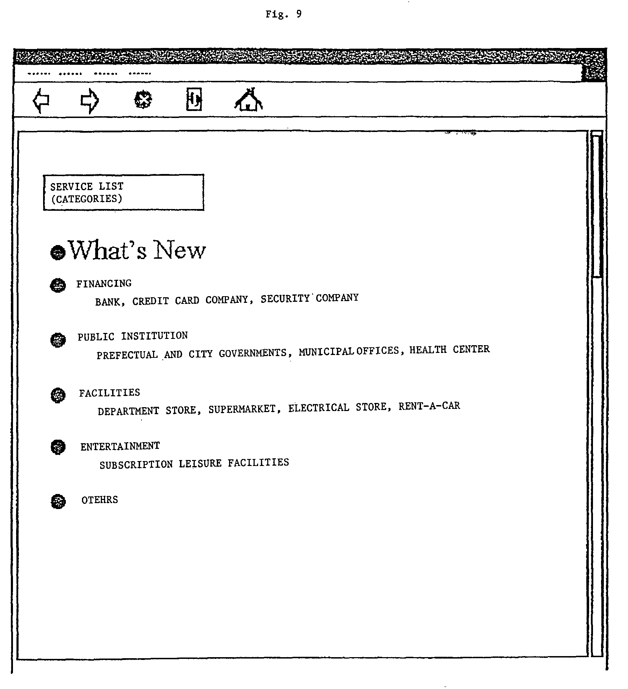

The user of user terminal 1 selects "to service list" on the display screen shown in Fig. 8. Internet service provider 2 then produces a screen display showing a list of categories in Fig. 9 on user terminal 1.

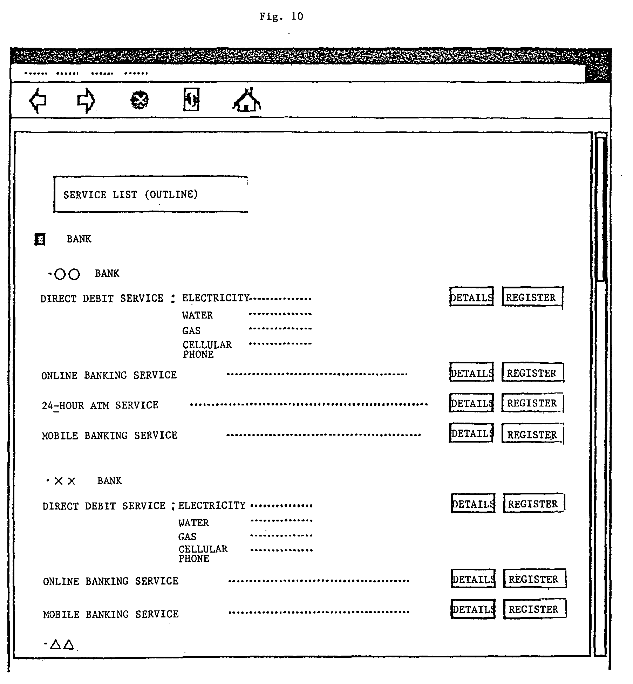

When the user of user terminal 1 attempts, for example, to make a detailed inquiry about or registration of a service of "bank" in the list of the categories shown in Fig. 9, the user selects "bank" on the display screen shown in Fig. 9 to click on it. In response thereto, Internet service provider 2 produces a screen display showing a list of services associated with the bank as shown in Fig. 10 on user terminal 1.

When the user of user terminal 1 makes an inquiry about details on "mobile banking service" of "○○ bank," for example, of the services associated with the bank shown in Fig. 10, the user selects "details" to the right of "mobile banking service" of "○○ bank" in Fig. 10 to click on it. Internet service provider 2 then displays a home page or the like (not shown) of service institution 3 (○○ bank in this case) on user terminal 1. The user of user terminal 1 sees the contents of the home page to check the details on the service.

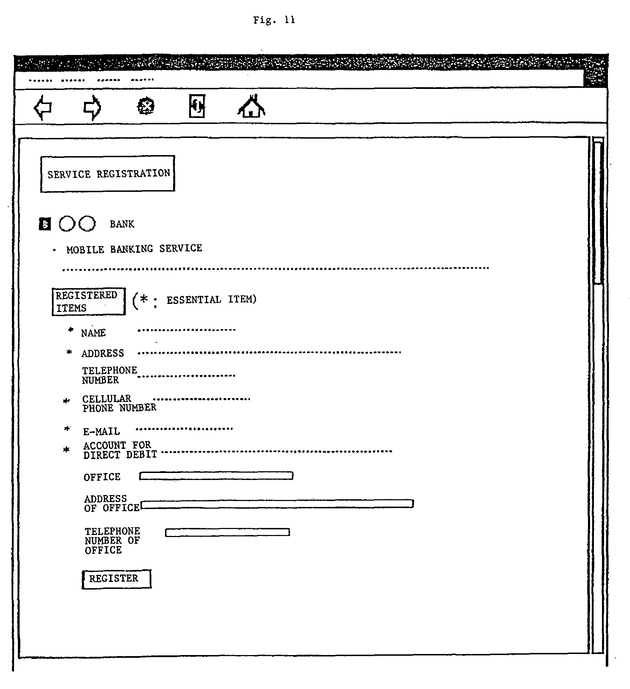

When the user of user terminal 1 registers, for example, "mobile banking service" of "○○ bank" of the services associated with the bank shown in Fig. 10, the user selects "register" to the right of "mobile banking service" of "○○ bank" in Fig. 10. Internet service provider 2 then produces a screen display for confirming the registration shown in Fig. 11 on user terminal 1 to show details of personal information registered with "○ ○ bank." In Fig. 11, the registered information is classified into essential items and optional items. An already entered item, if any, is displayed on this screen at the time of user registration.

When the user of user terminal 1 enters all the essential items on the display screen shown in Fig. 11 and additionally enters, for example, only his telephone number as an optional item (other optional items are left blank) if all the essential items shown in Fig. 11 are acceptable to the user. If all the essential items have been entered at the time of user registration, entries are not required again.

After the user of user terminal 1 enters all the essential items shown in Fig. 11, Internet service provider 2 accesses the database of service institution 3 (○○ bank in this case) through the Internet or by telephone. Internet service provider 2 registers "mobile banking service" for the user of user terminal 1 on the database.

After the completion of the registration of the service designated by the user of user terminal 1, Internet service provider 2 notifies user terminal 1 of that fact in a certain manner, for example through display on a home page as a list of registered services shown in Fig. 6 or an E-mail.

On the other hand, when the user of user terminal 1 wishes not to register a cellular phone number of the essential items shown in Fig. 11, the user may stop registration of "mobile banking service" of "○○ bank." In this case, since a cellular phone number may not be an essential item in another bank, for example ××bank in Fig. 10, the user may select "mobile banking service" of "×× bank."

Next, description is made for how the user of user terminal 1 deletes or changes a service already subscribed to under contract with service institution 3.

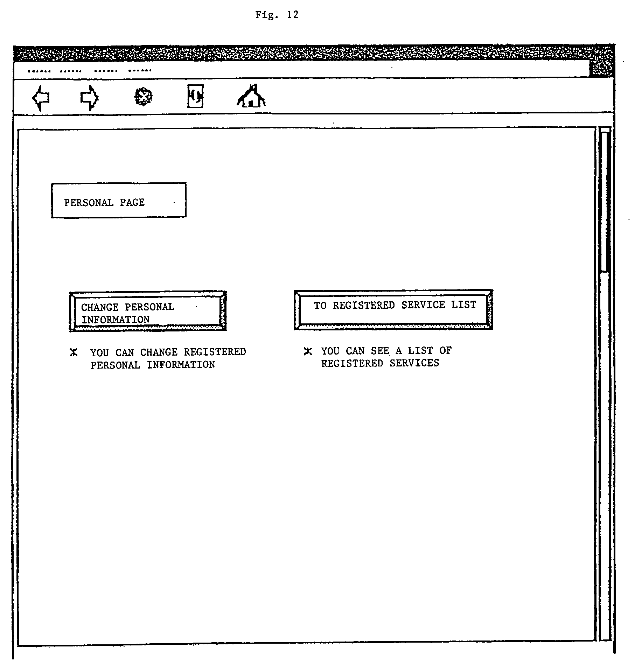

The user of user terminal 1 first selects "to personal page" on the top page of Internet service provider 2 shown in Fig. 8 to click on it. In response thereto, Internet service provider 2 produces a personal page screen display shown in Fig. 12.

Then, the user of user terminal 1 selects "to registered service list" on the display screen shown in Fig. 12 to click on it. Internet service provider 2 produces the screen display showing the list of personal registered services in Fig. 6.

When the user of user terminal 1 wishes to delete, for example, "mobile banking service" of "×× bank" of the list of personal registered services shown in Fig. 6, the user selects "delete" to the right of "mobile banking service" of "×× bank" to click on it. When the user wishes to change, for example, a service of "credit card company ○○○○," the user selects "change" to the right of "credit card company ○○○○" to click on it. The change of a service includes, for example, a change in the account for direct debit registered with credit card company ○○○○.

When the user of user terminal 1 selects deletion or change of a service on the display screen shown in Fig. 6, Internet service provider 2 produces a confirmation screen display (not shown) for the user to confirm the deletion or change, and asks the user for confirmation if a procedure for deletion or change of the service may be conducted.

As a result, if the deletion or change of the service is confirmed, Internet service provider 2 accesses the database of service institution 3 through the Internet or by telephone. Internet service provider 2 deletes or changes the service designated by the user of user terminal 1 on the database.

After the completion of the deletion or change of the service designated by the user of user terminal 1, Internet service provider 2 notifies user terminal 1 of that fact in the certain manner, for example through display on the home page as a list of personal registered services as shown in Fig. 6.

As described above, since the list of personal registered services shown in Fig. 6 is also displayed on user terminal 1 at the time of user registration, deletion or change of a service can be made also at the user registration in a manner similar to the aforementioned one.

Next, description is made for how the user of user terminal 1 changes or deletes the personal information already registered with each service institution 3.

The user of user terminal 1 first selects "to personal page" on the top page of Internet service provider 2 shown in Fig. 8 to click on it. Internet service provider 2 then produces the personal page screen display shown in Fig. 12 on user terminal 1.

Then, the user of user terminal 1 selects "change personal information" on the displayed page shown in Fig. 12 to click on it. In response thereto, Internet service provider 2 displays the displayed page at the time of personal information entry shown in Fig. 4 on user terminal 1. At this point, an already entered item, if any, is displayed on the displayed page shown in Fig. 4.

The user of user terminal 1 deletes or changes only the item of personal information (address, for example) which he wishes to delete or change on the display screen shown in Fig. 4 and requests Internet service provider 2 to conduct a service contract procedure in place of the user.

Upon receipt of the request for conducting the service contract procedure from the user of user terminal 1, Internet service provider 2 accesses the databases of all service institutions 3 under contract with Internet service provider 2 through the Internet or by telephone. Internet service provider 2 deletes or changes the item of the personal information of the user on the databases.

Internet service provider 2 notifies user terminal 1 of the completion of the procedure in a certain manner, for example by display on the home page as the list of personal registered services as shown in Fig. 6.

Therefore, the user of user terminal 1 can conduct a procedure for deletion or change in any of the services registered already with each service institution only by notifying Internet service provider 2 of deletion or change of personal information.

While a preferred embodiment of the present invention has been described using specific terms, such description is for illustrative purposes only, and it is to be understood that changes and variations may be made without departing from the spirit or scope of the following claims.

## Claims

1. A service contract procedure conducting system comprising:
a service institution for offering various kinds of services through a network;
a consumer terminal for make registration of any of said services offered by said service institution to obtain said service; and
a service provider for making a predetermined contract with a consumer using said consumer terminal and a predetermined contract with said service institution to conduct, in place of said consumer and said service institution, a procedure associated with a service contract including said registration of said service between said service institution and said consumer under said predetermined contracts with said service provider.

2. The system according to claim 1, wherein said consumer terminal transmits personal information of said consumer to said service provider through said network when said consumer makes said predetermined contract with said service provider, and
said service provider accesses a database of said service institution under said predetermined contract with said service provider through said network to register said personal information of said consumer transmitted from said consumer terminal on said database.

3. The system according to claim 2, wherein, when the registration of said personal information of said consumer is completed, said service provider notifies said consumer terminal of the completion through said network.

4. The system according to claim 3, wherein, when said personal information of said consumer registered with said service institution is changed and deleted, said consumer terminal transmits details on the change and deletion of said personal information to said service provider through said network, and
said service provider accesses said database of said service institution under said predetermined contract with said service provider through said network to change and delete said personal information of said consumer transmitted from said consumer terminal on said database.

5. The system according to claim 4, wherein, when the change and deletion of said personal information of said consumer is completed, said service provider notifies said consumer terminal of the completion through said network.

6. The system according to claim 5, wherein said service institution transmits service information provided by said service institution to said service provider through said network when said service institution makes said predetermined contract with said service provider, and thereafter, updates and transmits said service information as appropriate to said service provider.

7. The system according to claim 6, wherein said service provider sorts said services offered by said service institution and presents a list of said sorted services to said consumer terminal through said network in response to a request from said consumer terminal.

8. The system according to claim 7, wherein, when said consumer is registered as a subscriber to any of said services offered by said service institution, said consumer terminal causes said service provider to present a list of said services offered by said service institution to make a selection of said service from said presented services to which said consumer wishes to subscribe, and
said service provider accesses said database of said service institution offering said service selected by said consumer terminal through said network to register said consumer as a subscriber to said service on said database.

9. The system according to claim 8, wherein said service institution previously has notified said service provider through said network of details on essential personal information of said consumer required at the time of registration of said consumer as a subscriber to said service offered by said service institution, and
said service provider previously has notified said consumer terminal of said details on said essential personal information notified by said service institution, and registers said consumer as a subscriber to said service only when said essential personal information is registered.

10. The system according to claim 9, wherein, when the registration of said consumer is completed as a subscriber to said service offered by said service institution, said service provider notifies said consumer terminal of the completion through said network.

11. The system according to claim 10, wherein, when any of services subscribed to by said consumer of said services offered by said service institution is changed and deleted, said consumer terminal causes said service provider to present a list of said services subscribed to by said consumer, selects any of said presented services which said consumer wishes to change and delete, and transmits details on the change and deletion of said selected service to said service provider through said network, and
said service provider accesses said database of said service institution offering said service selected by said consumer terminal through said network to change and delete said service transmitted from said consumer terminal on said database.

12. The system according to claim 11, wherein, when the change and deletion of said service is completed, said service provider notifies said consumer terminal of the completion through said network.

13. The system according to claim 12, wherein said service provider sorts services subscribed to by said consumer of said services offered by said service institution and presents a list of said sorted services to said consumer terminal through said network in response to a request from said consumer terminal.

14. The system according to claim 13, wherein said service provider accesses said database of said service institution under said predetermined contract with said service provider through said network when said service provider makes said predetermined contract with said consumer, searches said database for services subscribed to by said consumer of said services offered by said service institution, sorts said services subscribed to by said consumer based on the search result, and presents a list of said sorted services to said consumer terminal through said network.

15. The system according to claim 13, wherein said service provider causes said consumer to register services subscribed to by said consumer of said services offered by said service institution through said consumer terminal when said service provider makes said predetermined contract with said consumer, sorts said services subscribed to by said consumer based on the registration result, and presents a list of said sorted services to said consumer terminal through said network.

16. A service provider connected to a service institution for offering various kinds of services through a network and to a consumer terminal for making a registration of any of said services offered by said service institution to obtain said service, said service provider making a predetermined contract with a consumer using said consumer terminal and a predetermined contract with said service institution to conduct, in place of said consumer and said service institution, a procedure associated with a service contract including said registration of said service between said consumer and said service institution under said predetermined contracts with said service provider.

17. The provider according to claim 16, wherein, when said provider makes said predetermined contract with said consumer, said provider causes said consumer terminal to transmit thereto personal information of said consumer through said network, and said provider accesses a database of said service institution under said predetermined contract with said provider through said network to register said personal information of said consumer transmitted from said consumer terminal on said database.

18. The provider according to claim 17, wherein, when the registration of said personal information of said consumer is completed, said provider notifies said consumer terminal of the completion through said network.

19. The provider according to claim 18, wherein, when a change or deletion in said personal information of said consumer is requested from said consumer terminal, said provider accesses said database of said service institution under said predetermined contract with said provider through said network to change and delete said personal information of said consumer transmitted from said consumer terminal on said database.

20. The provider according to claim 19, wherein, when the change and deletion of said personal information of said consumer is completed, said provider notifies said consumer terminal of the completion through said network.

21. The provider according to claim 20, wherein said provider sorts said services offered by said service institution and presents a list of said sorted services to said consumer terminal through said network in response to a request from said consumer terminal.

22. The provider according to claim 21, wherein said provider presents a list of said services offered by said service institution to said consumer terminal to make a selection of any of said presented services to which said consumer wishes to subscribe, and accesses said database of said service institution offering said service selected by said consumer terminal through said network to register said consumer as a subscriber to said service on said database.

23. The provider according to claim 22, wherein said provider causes said service institution to previously notify said service provider through said network of details on essential personal information of said consumer required at the time of registration of said consumer as a subscriber to said service offered by said service institution, and previously has notified said consumer terminal of said details on said essential personal information notified by said service institution, and registers said consumer as a subscriber to said service only when said essential personal information is registered.

24. The provider according to claim 23, wherein, when the registration of said consumer is completed as a subscriber to said service offered by said service institution, said provider notifies said consumer terminal of the completion through said network.

25. The provider according to claim 24, wherein, when a change and deletion in any of services subscribed to by said consumer is requested from said consumer terminal, said provider accesses said database of said service institution offering said service to which the change and election is requested through said network to change and delete said service transmitted from said consumer terminal on said database.

26. The provider according to claim 25, wherein, when the change and deletion of said service is completed, said provider notifies said consumer terminal of the completion through said network.

27. The system according to claim 26, wherein said provider sorts services subscribed to by said consumer of said services offered by said service institution and presents a list of said sorted services to said consumer terminal through said network in response to a request from said consumer terminal.

28. The provider according to claim 27, wherein said provider accesses said database of said service institution under said predetermined contract with said service provider through said network when said provider makes said predetermined contract with said consumer, searches said database for services subscribed to by said consumer of said services offered by said service institution, sorts said services subscribed to by said consumer based on the search result, and presents a list of said sorted services to said consumer terminal through said network.

29. The provider according to claim 27, wherein said provider causes said consumer to register services subscribed to by said consumer of said services offered by said service institution through said consumer terminal when said service provider makes said predetermined contract with said consumer, sorts said services subscribed to by said consumer based on the registration result, and presents a list of said sorted services to said consumer terminal through said network.

30. A method of conducting a service contract procedure using the system according to claim 1, said method comprising the steps of, when said consumer makes said predetermined contract with said service provider:
transmitting personal information of said consumer to said service provider from said consumer terminal through said network; and
accessing, by said service provider, a database of said service institution under said predetermined contract with said service provider through said network to register said personal information of said consumer transmitted from said consumer terminal on said database.

31. The method according to claim 30, wherein, when the registration of said personal information of said consumer is completed, said service provider notifies said consumer terminal of the completion of the registration of said personal information of said consumer through said network.

32. The method according to claim 31, further comprising the steps of, when a change and deletion is made in said personal information of said consumer registered with said service institution:
transmitting details on the change and deletion of said personal information from said consumer terminal to said service provider through said network; and
accessing, by said service provider, said database of said service institution under said predetermined contract with said service provider through said network to change and delete said personal information of said consumer transmitted from said consumer terminal on said database.

33. The method according to claim 32, wherein, when the change and deletion of said personal information of said consumer is completed, said service provider notifies said consumer terminal of the completion of the change and deletion of said personal information of said consumer through said network.

34. The method according to claim 33, wherein said service institution transmits service information provided by said service institution to said service provider through said network when said service institution makes said predetermined contract with said service provider, and thereafter, updates and transmits said service information as appropriate to said service provider.

35. The method according to claim 34, further comprising the steps of, when said consumer is registered as a subscriber to any of said services offered by said service institution:
presenting a list of said services offered by said service institution to said consumer terminal from said service provider through said network;
selecting, by said consumer terminal, said service from said list of said services presented by said service provider to which said consumer wishes to subscribe, and
accessing, by said service provider, said database of said service institution offering said service selected by said consumer terminal through said network to register said consumer as a subscriber to said service on said database.

36. The method according to claim 35, further comprising the steps of:
previously notifying, by said service institution, said service provider through said network of details on essential personal information of said consumer required at the time of registration of said consumer as a subscriber to said service offered by said service institution, and
previously notifying, by said service provider, said consumer terminal of said details on said essential personal information notified by said service institution,
wherein said service provider registers said consumer as a subscriber to said service only when said essential personal information is registered.

37. The method according to claim 36, wherein, when the registration of said consumer is completed as a subscriber to said service offered by said service institution, said service provider notifies said consumer terminal of the completion of the registration of said consumer as a subscriber to said service through said network.

38. The method according to claim 37, further comprising the steps of, when any of services subscribed to by said consumer of said services offered by said service institution is changed and deleted:
presenting a list of said services subscribed to by said consumer to said consumer terminal from said service provider through said network;
selecting, by said consumer terminal, any of said services presented by said service provider which said consumer wishes to change and delete, and transmitting details on the change and deletion of said selected service to said service provider through said network, and
accessing, by said service provider, said database of said service institution offering said service selected by said consumer terminal through said network to change and delete said service transmitted from said consumer terminal on said database.

39. The method according to claim 38, wherein, when the change and deletion of said service subscribed to by said consumer is completed, said service provider notifies said consumer terminal of the completion of the change and deletion of said service through said network.

40. The method according to claim 39, wherein, when said service provider makes said predetermined contract with said consumer, said service provider accesses said database of said service institution under said predetermined contract with said service provider through said network, searches said database for services subscribed to by said consumer of said services offered by said service institution, sorts said services subscribed to by said consumer based on the search result, and presents a list of said sorted services to said consumer terminal through said network.

41. The method according to claim 39, wherein, when said service provider makes said predetermined contract with said consumer, said service provider causes said consumer to register services subscribed to by said consumer of said services offered by said service institution through said consumer terminal, sorts said services subscribed to by said consumer based on the registration result, and presents a list of said sorted services to said consumer terminal through said network.
